# EUROPEAN PATENT APPLICATION

(11) **EP 1 942 484 A1**
(43) Date of publication of application: **09.07.2008**
(21) Application number: 08100026.7
(22) Date of filing: 02.01.2008
(51) Int. Cl.: G09G 3/288

(54) **Plasma display device and driving method thereof**

(30) Priority: 02.01.2007 KR 20070000364
(71) Applicant: Samsung SDI Co., Ltd., Suwon-si Gyeonggi-do (KR)
(72) Inventor: Han, Chan-Young, Suwon-si Gyeonggi-do (KR)
(74) Representative: Hengelhaupt, Jürgen

(57) **Abstract**

Disclosed is a plasma display device and a driving method thereof. The plasma display device is driven in a reset period, an address period and a sustain period. The plasma display device includes a power source unit for providing power with different voltage levels to the scan electrode driver for driving the scan electrodes in the reset period, the address period, and the sustain period.

## Description

### BACKGROUND

### 1. Field of the Invention

The present invention relates to a plasma display panel and a driving method thereof.

### 2. Discussion of Related Art

In a display panel of an AC plasma display device, scan electrodes and sustain electrodes are formed on a first surface in parallel, and address electrodes are formed on a second surface in a direction orthogonal to the scan electrodes and sustain electrodes. Further, the sustain electrodes are formed to correspond to the respective scan electrodes, and one end of each of the sustain electrodes is commonly connected to each other.

In general, in driving the display panel of the plasma display device, one frame is divided into a plurality of subfields each having weighting values. Each subfield includes a reset period, an address period, and a sustain period.

The reset period erases wall charges formed by a previous sustain discharge and sets up wall charges in order to stably perform a subsequent address discharge. The address period is the period, where turned-on cells and turned-off cells on the display panel are selected, to perform operation to accumulate the wall charges on the turned-on cells (the addressed cells). In addition, the sustain period is the period to perform the sustain discharge in order to actually display an image by the addressed cells.

In particular, in the address period, scan pulses are sequentially applied to a plurality of scan electrodes in order to select discharge cells intended to display image, and address pulses are applied to the address electrodes corresponding to the discharge cells to be turned on to generate the address discharge.

Meanwhile, the address discharge is determined by the density of priming particles and the wall voltage according to the wall charges formed in a discharge space of the plasma display panel. When the scan pulses are sequentially applied to the scan electrodes, portions of the discharge cells on the upper end of the panel generate the address discharge in the state that many priming particles formed in the reset period are present, while portions of the discharge cells on the lower end of the panel generate the address discharge in the state that many priming particles formed in the reset period have disappeared.

Furthermore, since the wall voltage also disappears according to the passage of time, the discharge delay time is longer than the width of the scan pulse due to the disappearance of the priming particles and the wall charges on the scan electrodes applied with the scan pulses later so that the address discharge can not be generated or is generated weakly.

### SUMMARY OF THE INVENTION

Embodiments of the present invention provide a plasma display device and a driving method thereof.

An embodiment of the present invention provides a plasma display device including a plasma display panel. The plasma display panel includes a plurality of address electrodes extending in a first direction on a first substrate, and a plurality of scan electrodes and a plurality of sustain electrodes extending in a second direction on a second substrate. A plurality of discharge cells are located at crossings of the address electrodes, the scan electrodes, and the sustain electrodes. The plasma display panel is driven in a reset period, an address period, and a sustain period. The plasma display device further includes an address electrode driver for applying a display data signal to the plurality of address electrodes for selecting discharge cells of the plurality of discharge cells to display an image, a sustain electrode driver for applying a driving voltage to the plurality of sustain electrodes. The plasma display device also includes a scan electrode driver having a falling reset unit for applying a gradually falling voltage from a first voltage to a second voltage in a falling ramp period of the reset period to the scan electrodes and a scan driver for sequentially applying a scan voltage to the scan electrodes during the address period. The scan voltage is lower than the second voltage. The plasma display device further include a power source unit for providing power to the address electrode driver, the scan electrode driver, and the sustain electrode driver. The power source unit variably provides the second voltage and the voltage to the scan electrode driver.

The power source unit may include a first rectifier for converting a first alternating current voltage into a direct current voltage, a transformer for receiving the direct current voltage as an input voltage, a switching controller for controlling a first switching element coupled to the transformer to convert the direct current voltage into a second alternating current voltage. The second alternating current voltage is converted to a third alternating current voltage. The power source unit further may include a second rectifier to convert the third alternating current voltage into an output voltage, and a feedback signal generator for monitoring the output voltage and providing a feedback signal to the switching controller for generating different output voltages for the same input voltage.

Another embodiment of the present invention provides a method of driving a plasma display panel. The plasma display panel includes a plurality of address electrodes extending in a first direction on a first substrate, and a plurality of scan electrodes and a plurality of sustain electrodes extending in a second direction on a second substrate. A plurality of discharge cells are located at crossings of the address electrodes, the scan electrodes, and the sustain electrodes. The plasma display panel is driven in a reset period, an address period, and a sustain period. The method includes applying a voltage gradually falling from a first voltage to a second voltage in a falling ramp period of the reset period to the scan electrodes, and sequentially applying a scan voltage to the scan electrodes during the address period. The scan voltage is lower than the second voltage. The second voltage and the scan voltage are provided from a power source unit in the falling ramp period and the address period, respectively.

### BRIEF DESCRIPTION OF THE DRAWINGS

These and/or other aspects and features of the invention will become apparent and more readily appreciated from the following description of the exemplary embodiments, taken in conjunction with the accompanying drawings of which:

FIG. 1 is a block diagram showing a plasma display device according to an embodiment of the present invention;

FIG. 2 is a driving waveform diagram of a plasma display device according to an embodiment of the present invention;

FIG. 3 is a driving circuit schematic diagram according to a first embodiment for generating the driving waveform as shown in FIG. 2;

FIG. 4 is a driving circuit schematic diagram according to a second embodiment for generating the driving waveform as shown in FIG. 2;

FIG. 5 is a timing diagram of a control signal and voltage corresponding to the driving waveform of FIG. 2;

FIG. 6 is a driving circuit schematic diagram according to a third embodiment of the present invention for generating the driving waveform of FIG. 2;

FIG. 7 is a timing diagram a control signal and voltage corresponding to the driving waveform of FIG. 2;

FIG. 8 is a block diagram schematically showing an exemplary embodiment of a power source unit shown in FIG. 1; and

FIG. 9A to FIG. 9C are schematic drawings of exemplary embodiments of a feedback signal generator included in the power source unit shown in the FIG. 8.

### DETAILED DESCRIPTION OF EXEMPLARY EMBODIMENTS

Hereinafter, exemplary embodiments according to the present invention will be described with reference to the accompanying drawings.

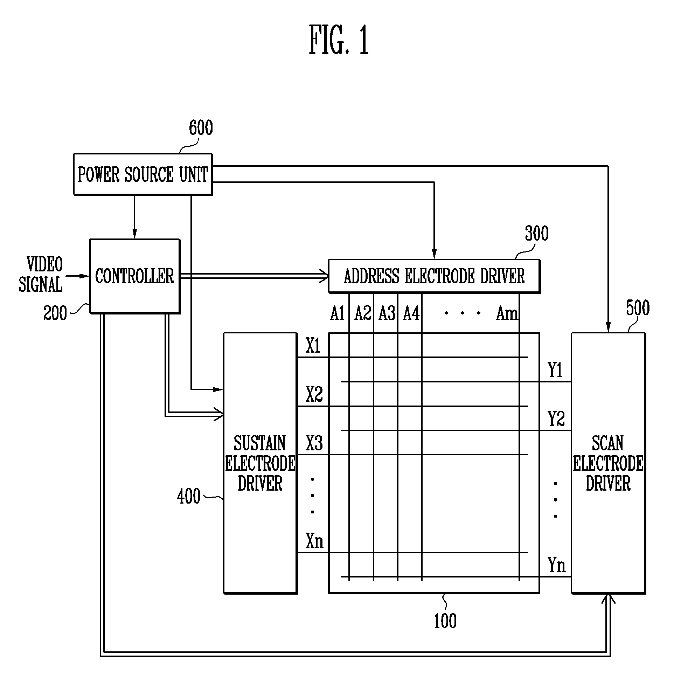

FIG. 1 is a block diagram showing a plasma display device according to an embodiment of the present invention.

Referring to FIG. 1, the plasma display device according to the embodiment of the present invention includes a plasma display panel 100, a controller 200, an address electrode driver 300, a sustain electrode driver 400, a scan electrode driver 500, and a power source unit 600.

The plasma display panel 100 includes a plurality of address electrodes A1 to Am extending in a column direction, and a plurality of sustain electrodes X1 to Xn and scan electrodes Y1 to Yn extending in a row direction, wherein the sustain electrodes and the scan electrodes are paired. The sustain electrodes X1 to Xn are formed to correspond to the respective scan electrodes Y1 to Yn, and in general, one end of each of the sustain electrodes are commonly connected.

The plasma display panel 100 includes a substrate (not shown) on which the sustain electrodes X1 to Xn and the scan electrodes Y1 to Yn are arranged, and another substrate (not shown) on which the address electrodes A1 to Am are arranged. The two substrates are arranged to be opposed to each other defining a discharge space therebetween. The scan electrodes Y1 to Yn and the sustain electrodes X1 to Xn are orthogonal to the address electrodes A1 to Am. The discharge space located at the crossings between the address electrodes A1 to Am and the sustain and the scan electrodes X1 to Xn and Y1 to Yn defines a plurality of discharge cells. The structure of such a plasma display panel 100 is only one example, and a panel having different structures to which a driving waveform to be described below can be applied, can also be applied to the present invention.

The controller 200 outputs an address driving control signal, a sustain electrode X driving control signal, and a scan electrode Y driving control signal by receiving a video signal from a source external of the plasma display device. The controller 200 is driven to divide one frame into a plurality of subfields, wherein each subfield includes a reset period, an address period and a sustain period, which carry out various operations over time.

The address electrode driver 300 receives the address driving control signal from the controller 200 and applies a display data signal for selecting the discharge cells intended to display an image to the corresponding address electrodes.

The sustain electrode driver 400 receives the sustain electrode X driving control signal from the controller 200 and applies a driving voltage to the sustain electrodes X.

The scan electrode driver 500 receives the scan electrode Y driving control signal from the controller 200 and applies the driving voltage to the scan electrodes Y.

The power source unit 600 supplies power required for driving the plasma display device to the controller 200 and the drivers 300, 400 and 500.

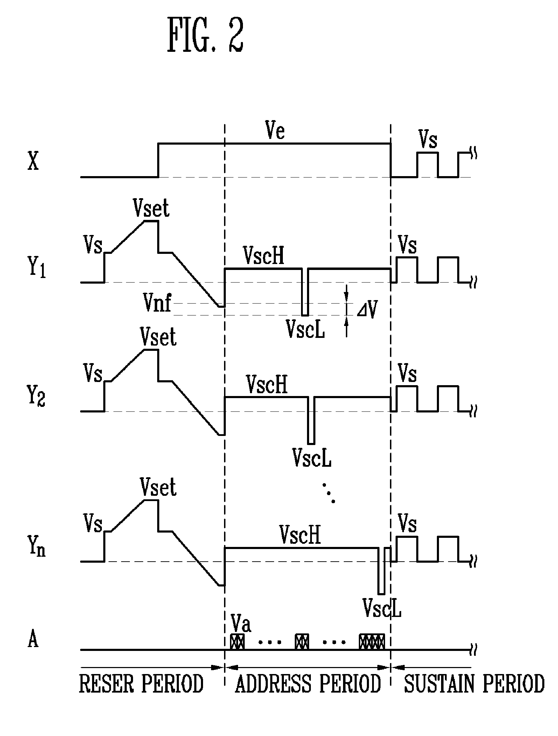

Hereinafter, referring to FIG. 2, the driving waveforms to be applied to the address electrodes A1 to Am, the sustain electrodes X1 to Xn and the scan electrodes Y1 to Yn in the respective subfields will be described. For ease of understanding, it will be described in reference to a discharge cell formed by one address electrode, one sustain electrode and one scan electrode.

FIG. 2 is a driving waveform diagram of a plasma display device according to an embodiment of the present invention. In FIG. 2, it will be described by illustrating with only one sustain electrode X and one address electrode A.

In the reset period, the voltage of the scan electrode Y (e.g., Y1, Y2, or Yn) increases (rising ramp) from the Vs voltage to the Vset voltage while the voltage of the sustain electrode X is maintained at 0V.

Then, a negative (-) wall charge is accumulated on the scan electrode Y, and a positive (+) wall charge is accumulated on the address electrode A and the sustain electrode X, while generating weak reset discharge from the scan electrode Y to the address electrode A and the sustain electrode X, respectively. Thereafter, the voltage of the scan electrode Y reduces (e.g., falling ramp) from the Vs voltage to the Vnf voltage. At this time, the address electrode A is applied with a reference voltage (e.g., 0V in FIG. 2), and the sustain electrode X is biased with a Ve voltage. Then, the negative (-) wall charge accumulated on the scan electrode Y and the positive (+) wall charge accumulated on the sustain electrode X and the address electrode A are erased, while generating the weak reset discharge between the scan electrode Y and the sustain electrode X and between the scan electrode Y and the address electrode A in the process of reducing the voltage of the scan electrode Y.

Next, in the address period, in order to select the discharge cell, scan pulses having a scan voltage VscL are sequentially applied to the scan electrode Y (e.g., Y1, Y2), and the scan electrode Y (e.g., Yn) to which the scan voltage VscL is not applied is biased with a VscH voltage (e.g., a non-scan voltage). Furthermore, an address pulse having a Va voltage is applied to the address electrode A and transferred to discharge cells intended to be selected among a plurality of discharge cells connected with the scan electrodes Y applied with the scan voltage VscL, and the reference voltage (e.g., 0V in FIG. 2) is applied to the address electrode A corresponding to the non-selected cells. Then, the positive (+) wall charge is formed on the scan electrode Y and the negative (-) wall charge is formed on the sustain electrode X, while an address discharge is being generated in the discharge cell formed by the address electrode A applied with the Va voltage and the scan electrode Y applied with the scan voltage VscL. Also, the negative (-) wall charge is formed on the address electrode A.

In the embodiment of the present invention shown in FIG. 2, when applying the scan pulse to the scan electrode Y (e.g., Y1 or Y2) in the address period, the scan voltage VscL is lower than the lowest voltage in the falling ramp period, that is, the Vnf voltage by a voltage of VΔ.

Accordingly, the difference (|VscL-Va|) between the scan voltage and the address voltage becomes large so that the discharge delay time becomes short, making it possible to generate a safe address discharge even in the discharge cell formed by the scan electrode Y.

Next, in the sustain period, sustain discharge pulses at the Vs voltage are alternately applied to the scan electrode Y and the sustain electrode X. Then, if the wall voltage is formed between the scan electrode Y and the sustain electrode X by the address discharge in the address period, the sustain discharge is generated between the scan electrode Y and the sustain electrode X by the wall charge and the Vs voltage. Thereafter, the process of applying the sustain discharge pulse at the Vs voltage to the scan electrode Y and the process of applying the sustain discharge pulse at the Vs voltage to the sustain electrode X repeat for the number of times corresponding to the weighting values of the corresponding subfield.

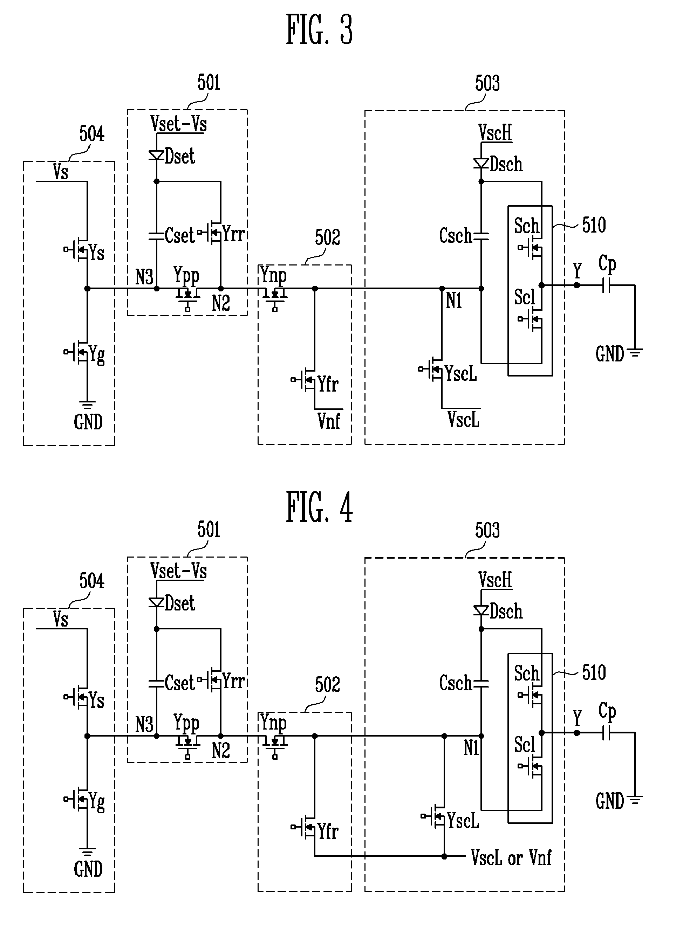

FIG. 3 is a driving circuit schematic diagram of the scan electrode driver 500 shown in FIG. 1 according to a first embodiment for generating the driving waveforms as shown in FIG. 2.

Hereinafter, a body diode (not shown) may be formed on each transistor shown in FIG. 3, wherein an anode of the body diode is connected to a source of the transistor and a cathode of the body diode is connected to a drain of the transistor.

Referring to FIG. 3, the scan electrode driver 500 includes a rising reset unit 501, a falling reset unit 502, a scan driver 503, and a sustain discharger 504.

The scan driver 503 includes a plurality of selecting circuits 510 connecting to a plurality of scan electrodes Y, respectively. For the convenience of description, only one scan electrode Y and one selecting circuit 510 are illustrated in FIG. 3. Also, the capacitive component formed by the sustain electrode X adjacent to the scan electrode Y is illustrated as a panel capacitor Cp. Although the scan electrode Y is connected to a sustain electrode driver 400 in FIG. 1 (not shown), it is displayed as a ground for the sake of convenience, and the present invention is not limited thereto.

The rising reset unit 501, which includes a diode Dset, a capacitor Cset, and transistors Ypp and Yrr, applies the gradually rising voltage from the Vs voltage to the Vset voltage to the scan electrode Y.

The capacitor Cset is connected between a source of the transistor Ypp and a drain of the transistor Yrr. The source of the transistor Ypp and the source of the transistor Yrr are connected to a third node N3 and a second node N2, respectively. At this time, when a transistor Yg to be described later is turned on, the capacitor Cset is charged with a Vset-Vs voltage, and when the transistor Yrr is turned on, the capacitor Cset operates to allow a weak current to flow from the drain to the source so that the voltage of the panel capacitor Cp gradually rises to the Vset voltage.

In addition, the diode Dset is connected between the power source Vset-Vs for supplying the Vset-Vs voltage and a contact of the drain of the transistor Yrr and the capacitor Cset so that the diode Dset blocks the current path flowing from the capacitor Cset through the diode Dset and toward the power source Vset-Vs.

Also, the falling reset unit 502 includes transistors Ynp and Yfr and applies a gradually falling voltage from the Vs voltage to the Vnf voltage to the scan electrode Y.

The drain of the transistor Yfr as a falling ramp switch is connected to a first node N1 and the source thereof is connected to a power source supplying the last voltage in the falling period, that is, the lowest voltage Vnf. When the transistor Yfr is turned on, it operates to flow a small current from its drain to its source in order to gradually reduce the voltage of the scan electrode Y to the Vnf voltage. At this time, the transistor Ynp blocks a current path toward the GND terminal through the transistor Yg, transistor Ypp, transistor Ynp, and transistor Yfr. In one embodiment, the current path is formed when the Vnf voltage is a negative voltage.

The scan driver 503, which includes a selecting circuit 510, a diode Dsch, a capacitor Csch, and a transistor YscL as a scan driving switch, sequentially applies the scan voltage VscL to the scan electrodes Y.

In general, the selecting circuit 510 connected to the respective scan electrodes Y1-Yn can be implemented as an integrated circuit (IC) so that it can sequentially select a plurality of scan electrodes Y1-Yn in the address period, and the driving circuit shown in FIG. 3 of the scan electrode driver 500 is connected to the scan electrodes Y1-Yn by means of the selecting circuit 510.

In addition, the selecting circuit 510 includes transistors Sch and Scl, the source of the transistor Sch and the drain of the transistor Scl are connected to the scan electrode Y of the panel capacitor Cp, and the source of the transistor Scl is connected to the first node N1.

In addition, the capacitor Csch is connected between the drain of the transistor Sch and the first node N1, and the diode Dsch is connected between the contact of the capacitor Csch and the drain of the transistor Sch, and the power source VscH for supplying the VscH voltage. Also, a first end of the capacitor Csch is connected to the drain of the transistor Sch, and a second end thereof is connected to the first node N1. A transistor YscL is connected between the first node N1 and the power source for supplying the scan voltage VscL.

In other words, the VscH voltage is applied to the non-selected scan electrode Y by using a voltage charged in the capacitor Csch by turning on the transistor Sch in the address period, and the scan voltage VscL is applied to the selected scan electrode Y by turning on the transistor Scl.

Also, the sustain discharger 504, which includes transistors Ys and Yg, applies a Vs voltage and a 0V voltage to the scan electrode Y. The drain of the transistor Ys is connected to the power source Vs supplying the Vs voltage, and the source thereof is connected to the third node N3. The drain of the transistor Yg is connected to the third node N3, and the source thereof is connected to the ground terminal (e.g., a power source 0V) for supplying the 0V. In addition, a power recovery circuit (not shown) recovering reactive power formed by a sustain discharge pulse in the sustain period and reusing it may be connected to the third node N3. Such a power recovery circuit was proposed by L.F. Weber (See, U.S. Patent Nos. 4,866,349 and 5,081,400).

In the embodiment shown in FIG. 3, in order to make the magnitude of the Vnf voltage and the VscL voltage different, that is, to make the VscL voltage lower than the Vnf Voltage so that a more stable addressing operation is performed, separate Vnf and VscL voltages are applied to the falling reset unit 502 and the scan driver 503.

In order to apply the separate voltages, the falling reset unit 502 and the scan driver 503 should be provided independently so that the number of circuit parts such as a transistor, etc. increases, and the size and cost of the entire device increase accordingly.

Also, in the case where the Vscl voltage is lower than the Vnf voltage, a current path is formed through the body diode of the transistor Yfr when the transistor YscL is turned on, a transistor (not shown) whose the body diode is formed in a direction opposite to the body diode of the transistor Yfr as shown in FIG. 3 may further be required.

In other words, in order to make the Vscl voltage lower than the Vnf voltage, in one embodiment, separate power sources are provided. Such arrangement causes the disadvantages as described above.

Therefore, another embodiment of the present invention variably provides the voltage applied to the scan electrode driver in different periods by using a power source with different output voltage levels to remove the need to use separate power sources to provide the lowest voltage Vnf in the falling ramp period and the scan voltage Vscl in the address period.

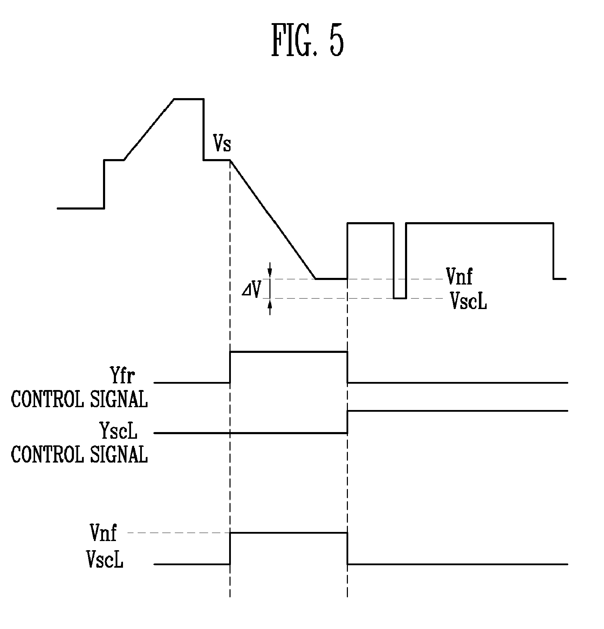

FIG. 4 is a driving circuit schematic diagram according to a second embodiment of the present invention for generating the driving waveform as shown in FIG. 2, and FIG. 5 is a timing diagram of a control signal and voltage corresponding to the driving waveforms of FIG. 2.

The description of the same constituents with those in the first embodiment of the present invention as shown in FIG. 3 will be omitted.

Referring to FIG. 4, a power source line connected to the falling ramp switch Yfr of the falling reset unit 502 and the scan driving switch YscL of the scan driver 503, and voltages with different levels are applied via the power source line in the falling ramp period of the reset period and the address period to implement the Vnf and the VscL, respectively.

The voltages with different levels are applied from a power source unit (not shown) connected to the power source line. It means that the Vnf voltage is provided in the falling ramp period, and the scan voltage VscL which is lower than the Vnf voltage by a voltage ΔV is provided in the address period.

Referring to FIG. 4 and FIG. 5, since the drain of the falling ramp switch Yfr is connected to a first node N1, and the source thereof is connected to the power source unit for supplying the Vnf in the falling period, the gradually falling voltage from the Vs voltage to the Vnf voltage can be applied in the falling ramp period by the control signal Yrf provided in the falling ramp period that the falling ramp switch Yfr is turned on as shown in FIG. 5.

Also, the drain of the scan driving switch YscL is connected to the first node Nland the source thereof is connected to the power source unit for supplying the VscL in the address period, and the scan driving switch YscL is turned on by the control signal YscL for the scan driving switch YscL as shown in FIG. 5 in the address period.

When the scan driving switch YscL is turned on, the capacitor Csch is charged with the VscH-VscL voltage, and the transistor ScH is turned on in the address period to apply the VscH voltage to the non-selected scan electrode Y by using the voltage charged in the capacitor Csch.

Then, when the scan electrodes Y are sequentially selected in the address period, the transistor Scl included in the selection circuit 510 of the selected scan electrode Y is turned on to apply the scan voltage VscL to the selected scan electrode Y.

However, in order to achieve this, the power source unit should provide the Vnf voltage in the falling ramp period and provide the scan voltage VscL in the address period.

Also, in generating the scan driving waveforms, another embodiment of the present invention removes the falling ramp switch Yfr for implementing the falling ramp waveform and performs the role of the falling ramp switch by using the scan driving switch YscL so that the number of circuit parts can be reduced, thereby minimizing the size and cost of the entire device.

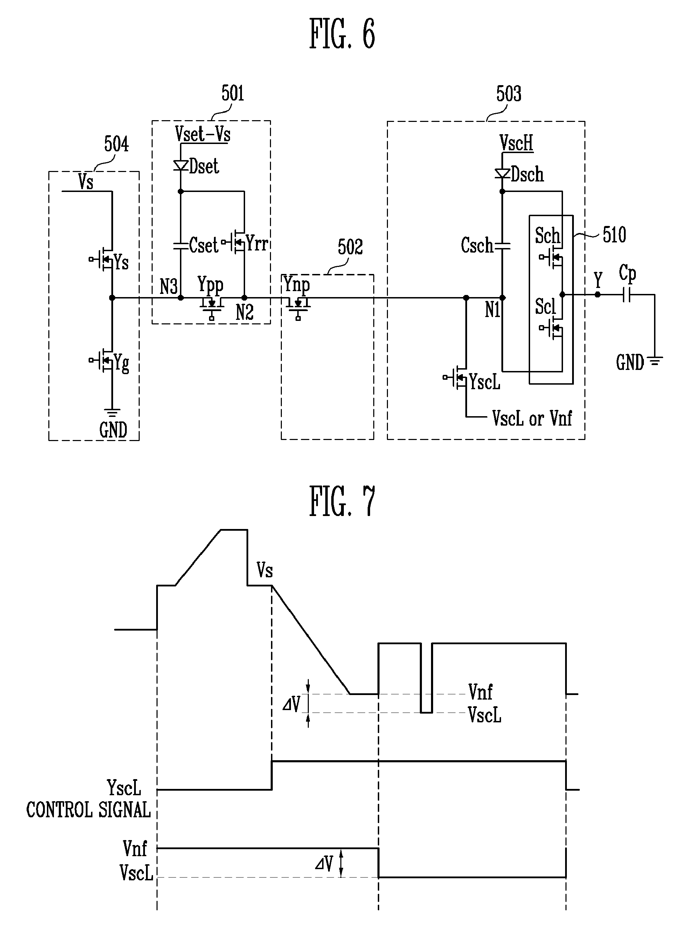

FIG. 6 is a driving circuit diagram according to the third embodiment of the present invention for generating the driving waveform of FIG. 2, and FIG. 7 is a timing diagram a control signal and voltage corresponding to a driving waveform of FIG. 2.

However, the description of the same constituents with those in the first embodiment of the present invention as shown in FIG. 3 will be omitted.

Referring to FIG. 6, the falling ramp switch Yfr of the falling reset unit 502 is removed, and the voltages with different level are applied via the power source line connected to the scan driving switch YscL of the scan driver 503 in the falling ramp period of the reset periods and the address period, respectively, to implement the Vnf and the VscL.

Thus, the voltages with different levels are applied from the power source unit (not shown) connected to the power source line. It means that the Vnf voltage is provided in the falling ramp period, and the scan voltage VscL is provided in the address period.

In order words, the scan driving switch YscL is turned on only during the address period in the case of the embodiment shown in FIG. 3, but in the embodiment shown in FIG. 6, it is turned-on in the address period as well as in the falling ramp period of the reset period to perform the role of the conventional falling ramp switch Yfr shown in FIG. 3.

Referring to FIG. 6 and FIG. 7, the drain of the scan driving switch YscL is connected to the first node N1, and the source thereof is connected to the power source for providing different voltages. The different voltages are referred to as the Vnf voltage provided in the falling ramp period and the scan voltage VscL in the address period, as described above.

Accordingly, the gradually falling voltage from the Vs voltage to the Vnf voltage can be applied to the scan electrode Y in the falling ramp period of the reset period by turning on the scan driving switch YscL.

Also, the scan driving switch YscL is turned on in the address period by the control signal YscL for the scan driving switch YscL as shown in FIG. 7. If the scan driving switch YscL is turned on, the capacitor Csch is charged with the VscH-VscL voltage, and turns on the transistor Sch in the address period to apply the VscH voltage to the non-selected scan electrode Y by using the voltage charged in the capacitor Csch.

Then, when the scan electrodes Y are sequentially selected in the address period, the transistor Scl included in the selection circuit 510 connected to the selected scan electrode Y is turned on to apply the scan voltage VscL, lower than the Vnf voltage by the voltage ΔV, to the scan electrode Y.

However, in order to achieve the above described operations, the power source unit should be able to provide the Vnf voltage in the falling ramp period and provide the scan voltage VscL in the address period.

In other words, both the second embodiment and the third embodiment of the present invention should include the power source unit capable of providing the Vnf voltage in the falling ramp period and provide the scan voltage VscL in the address period.

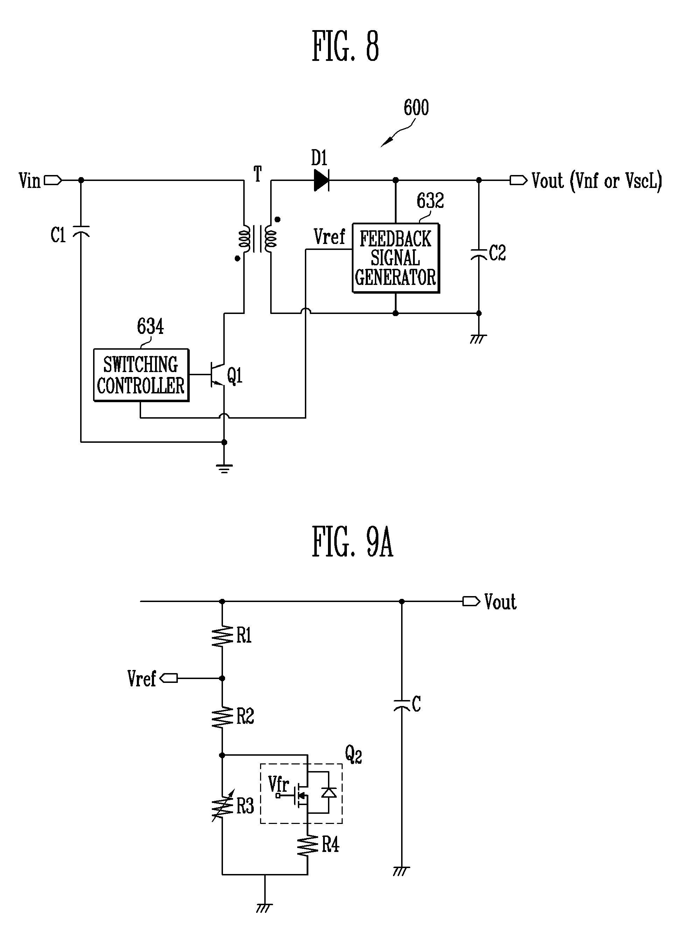

FIG. 8 is a block diagram schematically showing an embodiment of a power source unit 600 shown in FIG. 1.

However, only portions of the power source unit 600 which provides the Vnf voltage in the falling ramp period and provides the scan voltage VscL in the address period as described above with reference to FIGS. 4 to 7, will be described with reference to FIG. 8.

Also, the power source shown in FIG. 8 corresponds to only one embodiment, and the power source is thus not necessarily limited to the embodiment as shown in FIG. 8.

Referring to FIG. 8, the power source unit 600 includes a rectifier (the rectifying circuit including a smoothing capacitor C1) for converting alternating current from the external into a direct current; a transformer T for transforming and outputting another alternating current rectified through another rectifier into other voltages (e.g., voltages having a predetermined level); and a switching controller 634 for controlling a switching element Q1 that controls the output voltage of the power source output from the transformer and switching characteristics thereof. Also, the switching controller 634 is input with a feedback signal Vref according to the voltage value of a secondary output voltage from a feedback signal generator 632, making it possible to perform the switching control action of the switching controller 634.

Accordingly, after the alternating current voltage Vin applied from the external is converted into direct current voltage through the rectifiers each including the smoothing capacitor C1, the Vnf and the VscL voltages as direct current voltage required for the falling reset unit 502 and the scan driver 503 are provided through a switching power supply having an alternating current/direct current conversion mechanism as shown in FIG. 8.

The power source unit 600 according to embodiment of the present invention outputs output voltage Vout having different values for the same input voltage Vin, that is, the Vnf voltage and the VscL voltage.

Referring to FIG. 9A, for this purpose, in feedback signal generator 632, a switching element Q2 and a resistor R4 are further connected to a dividing resistor R3 included in the feedback signal generator 632 in parallel.

Since the switching element Q2 and the resistor R4 is connected to the dividing resistor R2 in parallel as above, the entire resistance values of the feedback signal generator are varied according to the operation of the switching element Q2 so that for the same input voltage Vin, the output voltage Vout with different levels, that is, Vnf and VscL can be output.

Also, the switching element Q1 and the switching controller 634 is a control device for maintaining each of the direct current voltages Vnf and VscL to be output in a user's desired waveform, and the voltage controlling switching is made by means of a voltage dividing circuit and a switching element (for example, a metal oxide semiconductor type field effect transistor, an insulated gate bipolar transistor, a thyrister, etc.)

When the switching element Q1 begins switching operation, alternating current type of energy is induced from a primary winding to a secondary winding of the transformer T. The induced energy induced to the secondary winding is output as power with a direct current output voltage Vout according to the winding ratio of the primary side to the secondary side of the transformer T via the diode D 1 and the ripple smoothing capacitor C2.

At this time, the switching controller 634 can control the switching characteristics of the switching element Q1 (switching frequency and on/off time) according to the feedback signal Vref input from the feedback signal generator 632.

Also, as described before, the power source unit 600 provides the Vnf voltage in the falling ramp period and provides the scan voltage VscL in the address period.

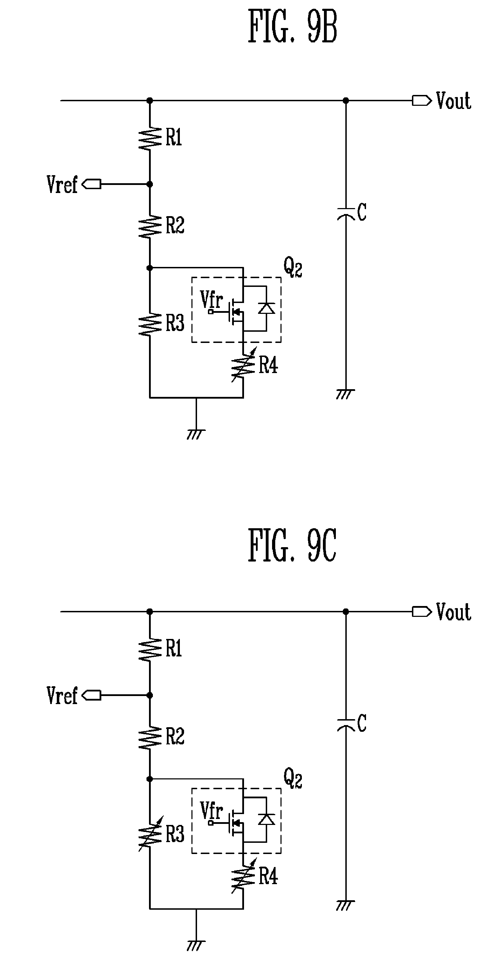

As above, in order to provide the direct current voltages Vnf and VscL with different levels in different periods, the power source unit 600 can include an exemplary embodiment of the feedback signal generator 632 as shown in FIG. 9.

FIG. 9A to FIG. 9C show a schematic drawing of a feedback signal generator 632 included in the power source unit 600 shown in FIG. 8.

In other words, as shown in FIGs. 9A to 9C, the specific switching element Q2 and resistor R4 are connected to the dividing resistor R3 in parallel to vary the total resistance values of the feedback signal generator 632 according to the operation of the switching element Q2 so that for the same input voltage as input, the output voltage Vout can have different levels, that is, Vnf and VscL as output.

The switching element Q2 operates according to a specific control signal applied. The case that the control signal Vfr is applied so that the switching element Q2 operates only in the falling ramp period will be described as the example thereof.

Referring to FIGs. 9A to 9C, the feedback signal Vref is generated from a voltage dividing circuit including R1, R2, R3 and optionally R4 for outputting the voltage Vout.

However, in the embodiments of the present invention, the voltage dividing circuit includes resistors R1, R2 and R3 connected in series, and the switching element Q2 and resistor R4 connected to the resistor R3 in parallel.

In other words, the total resistance value of the feedback signal generator 632 are varied according to the turn-on or turn-off state of the switching element Q2 so that for the same input voltage Vin as input, the output voltages Vout can have different voltage levels, that is, Vnf and VscL, as output.

More specifically, when the switching element Q2 is first turned on, that is, when the switching element Q2 is turned on by means of the control signal Vfr provided only in the period corresponding to the falling ramp period as described before, the total resistance value become R1+R2+R3*R4/(R3+R4).

To the contrary, when the switching element Q2 is turned off, the total resistance value become R1+R2+R3.

In other words, in the embodiments of the present invention, the period in which the switching element Q2 is turned on corresponds to the falling ramp period, and the different output voltages are output by means of changing the total resistance value of the feedback signal generator 632 to output the different voltage levels Vnf and VscL for the same input voltage.

Also, when the switching element Q2 is turned on, the Vref voltage of the feedback signal becomes Vref = (R2+R3//R4)/(R1+R2+R3//R4) x Vout, and when the switching element Q2 is turned off, the Vref voltage of the feedback signal becomes Vref = (R2+R3)/(R1+R2+R3) x Vout so that the difference is generated even in the voltage to be feedback.

At this time, the R3 and/or the R4 may be a variable resistor as shown in FIGs. 9A to 9C and the values of the variable resistors are controlled so that the difference ΔV between the Vnf voltage and the VscL voltage to be output is controlled.

Also, the R3 and/or the R4 may be varied by means of the control signal in logic by using a digital resistor rather than the variable resistor in this case, and it is possible to do so even though the switching element Q2 is provided.

Also, when the digital resistor is used, it is possible to use other conditions in addition to the voltage difference ΔV between the Vnf and the VscL, for example, the variation of scan voltage according to temperature, etc.

According to the embodiment of present invention, it removes a falling ramp switch for implementing a falling ramp waveform and performs the role of the falling ramp switch by using a scan driving switch YscL to reduce the number of circuit parts, thereby minimizing the size and cost of the entire device.

Also, embodiments of the present invention have an advantage that the voltage provided to the scan electrode driver 500 is variably provided in different periods so that it can be implemented to have different levels without separately providing the voltage Vnf in the falling ramp period and the scan voltage VscL in the address period, making it possible to perform more stable addressing operation.

While the present invention has been described in connection with certain exemplary embodiments, it is to be understood that the invention is not limited to the disclosed embodiments, on the contrary, it is intended to cover various modifications and equivalent arrangements included within the scope of the appended claims, and equivalents thereof.

## Claims

1. A plasma display device comprising:
a plasma display panel comprising a plurality of address electrodes extending in a first direction on a first substrate, a plurality of scan electrodes and a plurality of sustain electrodes extending in a second direction on a second substrate, a plurality of discharge cells at crossings of the address electrodes, the scan electrodes, and the sustain electrodes, the plasma display panel being adapted to being driven in a reset period, an address period, and a sustain period;
an address electrode driver adapted for applying a display data signal to the plurality of address electrodes for selecting discharge cells of the plurality of discharge cells to display an image;
a sustain electrode driver adapted for applying a driving voltage to the plurality of sustain electrodes;
a scan electrode driver comprising a falling reset unit adapted for applying a gradually falling voltage from a first voltage to a second voltage in a falling ramp period of the reset period to the scan electrodes, and a scan driver adapted for sequentially applying a scan voltage to the scan electrodes during the address period, the scan voltage being lower than the second voltage; and
a power source unit adapted for providing power to the address electrode driver, the scan electrode driver, and the sustain electrode driver,
wherein the power source unit is adapted to variably provide the second voltage and the scan voltage to the scan electrode driver.

2. The plasma display device as claimed in claim 1, wherein the power source unit is adapted to provide the second voltage to the scan electrode driver in the falling ramp period, and adapted to provide the scan voltage to the scan electrode driver in the address period.

3. The plasma display device as claimed in claim 1 or 2, wherein a terminal of a falling ramp switch of the falling reset unit and a terminal of a scan driving switch of the scan driver are coupled to a power source line coupled to the power source unit.

4. The plasma display device as claimed in claim 3, wherein the falling ramp switch is adapted to be turned on in the falling ramp period, and the scan driving switch is adapted to be turned on in the address period.

5. The plasma display device as claimed in claim 3 or 4, wherein the falling reset unit is provided with the second voltage from the power source unit through the power source line during the falling ramp period, and the scan driver is provided with the scan voltage from the power source unit through the power source line during the address period.

6. The plasma display device according to one of the preceding claims, wherein a falling ramp switch of the falling reset unit and a scan driving switch of the scan driver are implemented as a switch, and a terminal of the switch is coupled to a power source line coupled to the power source unit.

7. The plasma display device as claimed in claim 6, wherein the switch is adapted to be turned on during the falling ramp period and the address period.

8. The plasma display device as claimed in claim 7, wherein the second voltage is provided from the power source unit through the power source line during the falling ramp period, and the scan voltage is provided from the power source unit through the power source line during the address period.

9. The plasma display device according to one of the preceding claims, wherein the power source unit comprises:
a first rectifier adapted for converting a first alternating current voltage into a direct current voltage;
a transformer coupled to the first rectifier adapted for receiving the direct current voltage as an input voltage;
a switching controller adapted for controlling a first switching element coupled to the transformer to convert the direct current voltage into a second alternating current voltage, the second alternating current voltage being converted by the transformer to a third alternating current voltage rectified by a second rectifier to provide an output voltage; and
a feedback signal generator adapted for monitoring the output voltage and providing a feedback signal to the switching controller for generating different output voltages for the same input voltage.

10. The plasma display device as claimed in claim 9, wherein the feedback signal generator comprises a voltage dividing circuit, comprising:
a plurality of resistors coupled in series; and
a second switching element in series with a second resistor coupled in parallel to a first resistor among the plurality of resistors coupled in series.

11. The plasma display device as claimed in claim 10, wherein the feedback signal generator is adapted such that the total resistance value of the feedback signal generator is varied according to the turn-on or turn-off of the second switching element.

12. The plasma display device as claimed in claim 10, wherein the first resistor and/or the second resistor is a variable resistor.

13. The plasma display device as claimed in claim 12, wherein the different output voltages are controlled by controlling the value of the variable resistor.

14. A method of driving a plasma display panel comprising a plurality of address electrodes extending in a first direction on a first substrate, a plurality of scan electrodes and a plurality of sustain electrodes extending in a second direction on a second substrate, a plurality of discharge cells at crossings of the address electrodes, the scan electrodes, and the sustain electrodes, the plasma display panel being driven in a reset period, an address period, and a sustain period, the method comprising:
applying a voltage gradually falling from a first voltage to a second voltage in a falling ramp period of the reset period to the scan electrodes; and
sequentially applying a scan voltage to the scan electrodes during the address period, the scan voltage being lower than the second voltage,
wherein the second voltage and the scan voltage are provided from a power source unit in the falling ramp period and the address period, respectively.

15. The method as claimed in claim 14, wherein the power source unit comprises a voltage dividing circuit having a plurality of resistors and a switching element for generating different output voltages for a same input voltage,
wherein the total resistance value of the voltage dividing circuit are varied according to the turn-on or turn-off of the second switching element.

16. The method as claimed in claim 15, wherein the switching element is turned on during the falling ramp period.

17. The method as claimed in claim 16, wherein when the switching element is turned on, the second voltage is generated and is provided in the falling ramp period, and when the switching element is turned off, the scan voltage is generated and is provided in the address period.
